Europäisches Patentamt

European Patent Office

Office européen des brevets

(11) Publication number: 0 613 857 A1

## EUROPEAN PATENT APPLICATION

(21) Application number: 94103059.5

(22) Date of filing: 01.03.94

(51) Int. Cl.⁵: C01B 23/00

(30) Priority: 02.03.93 US 24964

(43) Date of publication of application:
07.09.94 Bulletin 94/36

(84) Designated Contracting States:
BE DE ES FR GB IT NL

(71) Applicant: PRAXAIR TECHNOLOGY, INC.
39 Old Ridgebury Road
Danbury, CT 06810-5113 (US)

(72) Inventor: Prasad, Ravi
12 Yardly Lane
East Amherst, New York 14051 (US)
Inventor: Dray, James Robert
267 Hartford Avenue
Kenmore, New York 14223 (US)

(74) Representative: Schwan, Gerhard, Dipl.-Ing.
Elfenstrasse 32
D-81739 München (DE)

(54) Purification of crude argon.

(57) A crude argon stream is passed to a catalytic deoxygenation unit, with the purified argon therefrom being dried in a membrane dryer and optionally in an adsorption system.

Fig. 2

Rank Xerox (UK) Business Services
(3.10/3.09/3.3.4)

## Background of the Invention

Field of the Invention - The invention relates to the purification of argon. More particularly, it relates to the improved production of high purity argon product.

Description of the Prior Art - In current commercial practice, cryogenic distillation of an argon-containing gas stream produces low pressure argon of approximately 97% purity, having a 2% oxygen and 1% nitrogen content. This crude argon is then compressed, typically to 70 psia, cooled and mixed with hydrogen over a noble metal catalyst in deoxo, i.e. catalytic combustion, units. The hydrogen reacts with the residual oxygen content of the crude argon to form moisture and generate heat. After cooling and condensate removal, the resulting purified argon stream is passed through an adsorption system to dry the gas to a suitable dew point. During periods of high ambient and/or cooling water temperature, the feed gas to the adsorption system may be as hot as 115°F, representing both a significant increase in its moisture content and a reduction in the capacity of the adsorbent material to adsorb the moisture from the purified argon stream. Such circumstances leads to operational problems, such as premature moisture breakthrough from the adsorption system and/or reduced adsorbent cycle time. The latter problem results in increased product loss upon blowdown, i.e., depressurization of the adsorbent vessel, and an increase in the back purge requirements of the system.

There is a genuine desire in the art for reduction in temperature sensitivity and improvement in the operational stability of drying the purified argon stream recovered from a deoxo unit. Such desirable benefits need to be achieved, for practical commercial purposes, in a simple, low cost manner.

It is an object of the invention, therefore, to provide an improved process and system for the production of dry, high purity argon.

It is another object of the invention to provide an improved process and system for the purification of crude argon streams.

It is a further object of the invention to provide a simple, low cost process and system for reducing the temperature sensitivity, and improving the operational stability of crude argon purification operations.

With these types and other objects in mind, the invention is hereinafter described in detail, the novel features thereof being particularly pointed out in the appended claims.

## Summary of the Invention

A membrane dryer is used to dry a purified argon stream that has passed through a catalytic deoxygenation, i.e., deoxo, unit. Such use of the membrane dryer reduces the sensitivity of the overall deoxo drying operation to variations in product argon temperature.

## Brief Description of the Drawings

The invention is further described herein with reference to the accompanying drawings in which:

Fig. 1 is a process flow diagram illustrating a conventional processing system for the purification of a crude argon stream;

Fig. 2 is a process flow diagram illustrating an embodiment of the invention for the purification of a crude argon stream using a product refluxed membrane dryer;

Fig. 3 is a process flow diagram of an alternative embodiment of the invention using a permeation type membrane dryer; and

Fig. 4 is a process flow diagram of an embodiment of the invention using a feed refluxed membrane dryer.

## Detailed Description of the Invention

The objects of the invention are accomplished by the use of membrane dryers that are relatively insensitive to variations in the temperature of the argon stream being dried following purification in a deoxo unit. In general, although the $H_2O$/argon separation factor decreases with increasing temperature, the impact thereof is not large due to the high initial level of said separation factor. As a result, no excessive or significant increase in argon product loss is encountered as a result of increased permeation of argon under higher temperature conditions during periods of high ambient and/or cooling water temperature. In fact, the intrinsic moisture permeability of the membrane dryer may actually increase with increasing temperature, thereby helping compensate for higher dryer inlet moisture concentrations under the higher than normal temperature conditions encountered in the field. In some circumstances, depending on system economics and argon product dew point requirements, the adsorption system used in conventional argon purification/drying operations can be eliminated entirely. This has the benefit of removing a source of product particulate contamination, in addition to reducing the capital and operating cost of the overall system. In other embodiments in which a conventional adsorption system is employed, the placement of a membrane dryer ahead, or upstream, of said adsorption system serves to reduce the moisture content of the argon fed to the adsorption system, allowing it to operate on a more stable and efficient cycle time, and possibly also providing energy savings in the operation of the adsorption system.

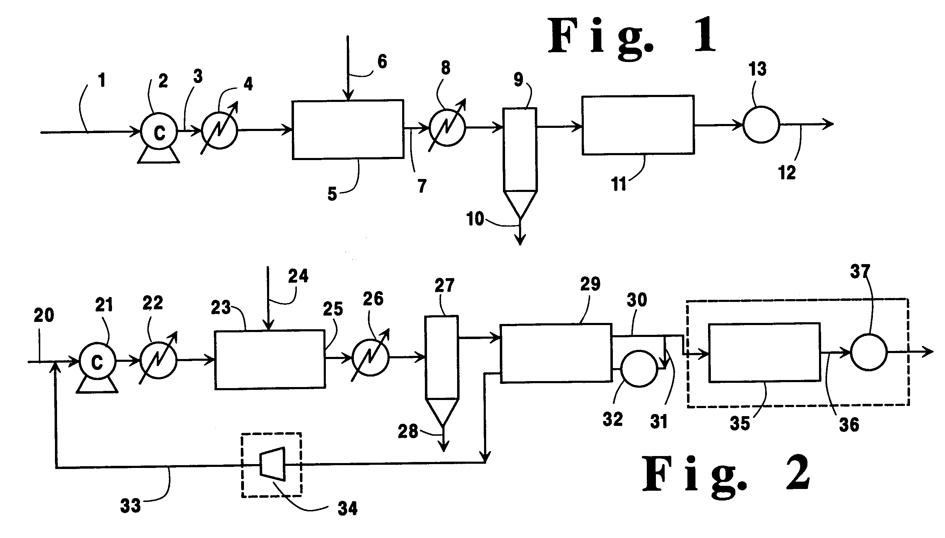

In current practice as illustrated in Fig. 1 of the drawings, a crude argon product stream, as obtained by the cryogenic distillation of an argon-containing gas stream typically contains about 97% argon, 2% oxygen and 1% nitrogen. This stream is typically mixed with a hydrogen containing stream obtained from an argon rectification reboiler to obtain a crude argon stream containing approximately 95% argon, 2% oxygen, 2% hydrogen and 1% nitrogen, which is passed in line 1 to compressor 2. After compression therein typically from 15 psia to 70 psia, the crude argon stream is passed in line 3 to heat exchanger 4 and to deoxo unit 5 for catalytic reaction with hydrogen passed thereto through line 6. The hydrogen reacts with the residual oxygen contained in the crude argon stream to form moisture and generate heat. The thus-purified argon stream is withdrawn from deoxo unit 5 at a temperature generally within the range of 300-1,000°F through line 7 for cooling in heat exchanger 8 and condensate removal in condensate separation vessel 9, having water removal discharge line 10, before passage to adsorption system 11 for drying to a suitable dew point. A dried, purified argon stream is removed from adsorption system 11 through line 12, containing dust filter 13, for recovery as argon product containing about 97% argon, 2% hydrogen and 1% nitrogen, the oxygen content of the crude argon having been essentially completely removed by reaction in the deoxo unit.

During periods of high ambient and/or cooling water temperature, the purified argon feed gas to the adsorption system may be as hot as 115°F or more. The capacity of most commonly desirable adsorbents to remove moisture is, however, inversely related to the temperature thereof. Furthermore, the moisture content of a saturated gas stream increases dramatically with temperature. For example, saturated argon at 100 psia and 115°F carries 50% more moisture than saturated argon at the same pressure and 100°F. The combination of reduced adsorbent capacity and increased inlet moisture loading retires that either the argon product pressure dew point must be allowed to increase, or the bed cycle time must be substantially reduced. As indicated above, shorter adsorbent bed cycle times result in an increase in product loss due to increased blowdown, i.e., depressurization of an adsorbent bed to its lower desorption pressure, and an increase in the back purge requirements of the system.

In the practice of the invention in accordance with the embodiment thereof illustrated in Fig. 2, crude argon is passed in feed line 20 to feed compressor 21 and heat exchanger 22 before being introduced into deoxo unit 23 to which hydrogen is passed in line 24. A wet, purified argon stream is removed from deoxo unit 23 and is passed in line 25, containing heat exchanger 26 and moisture removal vessel 27, having moisture removal line 28, to membrane dryer 29 on the feed side thereof. The more selectively permeable moisture in said wet, purified argon stream selectively permeates from the feed side to the permeate side of the membrane. A dry, purified argon stream is withdrawn from membrane dryer at the product end thereof through line 30. To facilitate removal of the more selectively permeable moisture from the permeate side of membrane dryer 29, a portion of the argon product gas in line 30 is advantageously recycled through line 31 containing valve 32 for passage to the permeate side of membrane dryer 29 as purge gas, desirably for countercurrent flow therethrough, i.e., from the product end to the feed end in countercurrent flow to the passage of feed gas on the feed side of the membrane dryer. Such purge gas facilitates removal of permeating moisture from the surface of the permeate side of the membrane dryer. Moisture-laden permeate gas and purge gas are withdrawn from membrane dryer 29 through line 33 for recycle to the feed line 20 upstream of feed compressor 21. As illustrated in Fig. 2, optional vacuum pump 34 may be positioned in line 33 to facilitate the withdrawal of permeate and purge gas from the permeate side of membrane dryer 29. As also shown in Fig. 2, the argon product stream in line 30 may optionally be passed to adsorption system 35 for additional drying. The dry, purified argon stream from adsorption system 35 is recovered in line 36, desirably containing dust filter 37, as the dry, high purity argon product.

In an illustrative example of the practice of the invention pursuant to the Fig. 2 embodiment thereof, 10,000 SCFH of 97% crude argon is treated by first being compressed to a desired pressure of 70 psia and then passed to deoxo, i.e., catalyst deoxygenation, system 23. The residual oxygen content of the crude argon stream is reacted therein with hydrogen over a noble metal catalyst in an exothermic reaction. Following cooling and condensate removal, the product argon stream is saturated with moisture at the operating conditions employed, typically 70 psia and approximately 115°F under the higher ambient temperature conditions referred to above. This wet, purified argon stream is treated in refluxed membrane dryer 29 having the characteristics listed in Table 1 below.

Table 1

| Argon Deoxo Membrane Dryer Operating Conditions and Membrane Characteristics | | |
|---|---|---|
| Crude Argon Flow, CFH | | 10,000 |
| Purity, | % Argon | 95 |
| | % $N_2$ | 1 |
| | % $O_2$ | 2 |
| | % $H_2$ | 2 |
| Temperature, °F | | 115 |
| Feed Pressure, PSIA | | 70 |
| Permeate Pressure, PSIA | | 15 |
| Membrane Selectivity, | $H_2O/O_2$ | 1000 |
| | $O_2/N_2$ | 6 |
| $H_2O$ P/t (Barrer/cm) | | $1.27 \times 10^7$ |

The performance of the membrane dryer can be summarized in terms of three key parameters. The first is Area Factor, which is a measure of the membrane area requirement per unit of product flow rate. The second is Purge Ratio (ø), which is the ratio of the permeate plus purge flow to the product flow. The third key parameter is the desired Product Dew Point, in °F, at the process pressure. Calculated performance data for the example above is shown in Fig. 2 below.

## Table 2

### Argon Deoxo Membrane Dryer Performance

#### @ ∅ = 0.25

| Area Factor (Ft²/CFH) | Pressure Dew Point (°F) |
|---|---|
| 0.041 | 80 |
| 0.180 | 40 |
| 0.620 | 0 |
| 1.550 | -40 |

#### @ Area Factor = 0.4

| ∅ | Pressure Dew Point °F |
|---|---|
| 0.225 | 40 |
| 0.270 | 0 |
| 0.315 | -40 |

#### @ Product Dew Point = 0°

| ∅ | Area Factor (Ft²/CFH) |
|---|---|
| 0.25 | 0.62 |
| 0.28 | 0.33 |
| 0.30 | 0.27 |
| 0.33 | 0.22 |
| 0.35 | 0.20 |

It will be seen that, at a constant Purge Ratio, the Product Dew Point decreases as the Area Factor increases. If the Area Factor is kept constant, the Product Dew Point can be decreased by increasing the Purge Ratio. Finally, to maintain a constant Product Dew Point, the Purge Ratio must increase if the Area Factor is reduced. The selection of design parameters for a given high purity argon production operation will depend in the balance of capital costs, represented by the Area Factor, and operating expenses, represented by the Purge Ratio, required to produce a desired Product Dew Point. In any event, such use of a membrane dryer ahead of the adsorption system of conventional practice provides a simple, low cost means for reducing temperature sensitivity and improving the operational stability of drying the wet, purified argon stream obtained from the deoxo unit. Product loss and/or contamination, as by back permeation of any residual oxygen present in the purified argon stream passed from the deoxo unit to the membrane dryer and selectively permeated to the permeate side of said membrane dryer, is minimized by refluxing, or purging, the membrane dryer on the low pressure permeate side thereof, and recycling the permeate/purge gas stream withdrawn form the permeate side of the membrane dryer to the inlet of feed compressor 21.

As noted above and as will be appreciated by those skilled in the art, many common membrane materials are characterized by a very high permeability to moisture relative to that of other gases, such as argon. Fluctuations in operating temperature thus have little impact on the performance of typical membrane dryers despite the high inlet moisture conditions pertaining in the practice of the invention. A reflux type membrane dryer, in which purge gas is flowed on the permeate side of the membrane, has the added capability of responding to variations in feed temperature by changing the Purge Ratio to maintain a nearly constant Product Dew Point. Purge Ratios in the range of from about 2% to about 25% of the product gas would typically be required in the practice of the Fig. 2 embodiment of the invention, although it is within the scope of the invention to employ a Purge Ratio in the range of from about 1% to about 50% or more. It will be understood that the incorporation of a membrane dryer in the overall deoxo/drying system makes the argon deoxo drying operation less sensitive to variations in product argon temperature than is the case in the practice of the conventional operation of Fig. 1. The membrane dryer thus serves to level out the duty required of the conventional adsorption system for the drying of the purified argon product. The membrane dryer is typically capable of providing pressure dew points on the order of -60°F and above, although dew points as low as -100°F can be achieved. Depending on plant economics and the required Product Dew Point, the use of said membrane dryer may obviate the need for an adsorption system entirely, as noted above.

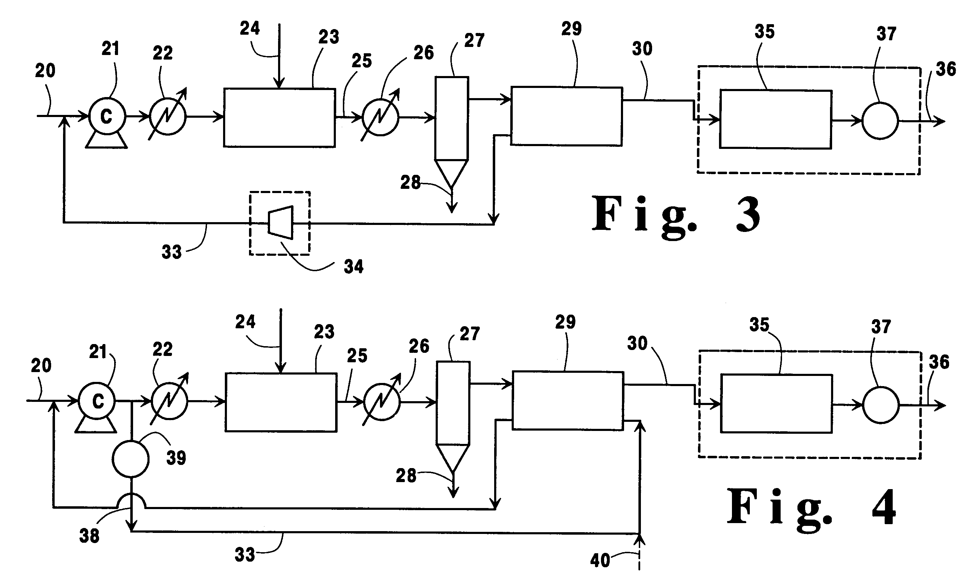

In an alternative embodiment for the practice of the invention, a permeation type membrane dryer can be used to remove moisture from the purified argon deoxo stream. This embodiment is illustrated in Fig. 3 of the drawings. For convenience, the common elements of this embodiment are numbered the same as in the Fig. 2 embodiment, the only change being that line 31 for the recycle of a portion of the argon product for use as purge gas, is not employed. The moisture-laden permeate gas withdrawn from membrane dryer 29 is recycled to the inlet of feed compressor 21, as in the Fig. 2 embodiment, for the recovery of argon that permeates the membrane along with the more selectively permeable moisture. While the Fig. 3 embodiment of the invention will be seen to embody many of the advantages of the generally more preferred Fig. 2 embodiment, the use of argon permeate gas, rather than reflux or purge gas, to facilitate removal of moisture from the purified argon product, serves to remove a degree of freedom in the ability of the membrane dryer system to respond to variations in operating conditions.

In another embodiment of the invention, the membrane dryer employed to dry the purified argon product is refluxed on the low pressure permeate side with a portion of the dry crude argon feed stream to the deoxo unit. This embodiment is illustrated in Fig. 4. As with the Fig. 3 embodiment, the common elements of Fig. 4 are numbered using the same numbers employed in Fig. 2. As in the Fig. 3 embodiment, argon product recycle line 31 of Fig. 2 is not required. However, a portion of the dry, compressed crude argon stream in Line 20 downstream of feed compressor 21 is withdrawn through line 38, containing valve 39, for membrane dryer purge purposes. Thus, line 38 is used to pass said withdrawn portion of dry, crude argon to the permeate side of membrane dryer 29, preferably to the product end thereof, for use as countercurrent purge gas facilitating the removal of selectively permeable moisture from the surface of the membrane on the permeate side thereof. The moisture-laden permeate/purge stream removed from the product end of membrane dryer 29 is passed to crude argon feed line 20, as in the Fig. 2 embodiment, upstream of feed compressor 21. This particular embodiment has the advantage of reducing the loss in process efficiency that results from the recycling of high purity product argon and mixing it with the crude argon feed stream. However, the use of a reflux stream containing significant amounts of oxygen, i.e., approximately 2% in the crude argon stream, presents the possibility of product contamination by the back permeation of oxygen from the permeate side to the feed side of membrane dryer 29 because of the lower concentration of oxygen present in the wet, purified argon product stream passing on the feed side of membrane dryer 21.

Those skilled in the art will appreciate that various changes and modifications can be made in the practice of the invention without departing from the scope of the invention as recited in the appended claims. Thus, the deoxo unit employed in the practice of the invention comprises a well known catalytic combustion system. As commonly employed, hydrogen is introduced into the deoxo unit in an amount needed to provide the stoichiometric quantity of hydrogen needed to react with essentially all of the oxygen in the crude argon stream being passed to the deoxo unit. If desired in light of the purity requirements of the argon product, however, the amount of hydrogen or other reactant employed may be such as to result in a small excess of hydrogen, or other reactant, that remains a part of the product argon stream. The deoxo unit typically employs a noble metal catalyst, such as platinum or a platinum-palladium catalyst supported on an alumina substrate. The catalytic combustion system can comprise one or more catalytic beds. While the description has referred to the reaction of the oxygen content of the crude argon, obtained by cryogenic distillation of an argon containing gas or otherwise, it will be understood that a fuel gas, such as methane or other such hydrocarbon gas, can be used in place of hydrogen for reaction with the oxygen content of the crude argon to form moisture.

It is within the scope of the invention to reflux the membrane dryer with a dry purge stream other than the product and feed streams employed in the Fig. 2 and Fig. 4 embodiments of the invention as disclosed above. Thus, other available sources of dry purge gas, such as the hydrogen recycle stream from the reboiler of the argon rectification column, or the hydrogen stream used in the deoxo unit, can be employed for such purge purposes. The passage of such other available dry purge stream to the permeate side of the membrane dryer is illustrated by line 40 in Fig. 4, it being understood that such other source of dry purge gas can thus be used in place of passing a portion of the feed gas through line 38 to membrane dryer 29 for purge purposes. Such other source of available dry purge gas may optionally be recycled to the feed of the compressor, as by passage through line 33 as shown in Fig. 4.

It will be appreciated that various membrane configurations, such as spiral wound membranes, can be used in the practice of the invention, although hollow fiber membranes are advantageous and are generally preferred, particularly in helically wound form. The gas flow patterns utilized in the membrane dryer can be of the cross-flow type or can be of the generally more preferred countercurrent flow type. Using the highly advantageous hollow fiber membrane configurations, the feed flow can either be inside-out, in which the wet, purified crude argon feed is passed through the bores of the hollow fiber with permeate gas being recovered from the shell side of a membrane bundle, or outside-in, with passage of the wet, purified argon feed to the outside surface of the membrane bundle and with permeate gas being recovered from the bores of the hollow fiber. In order to establish a generally preferred countercurrent flow pattern between the gas within the bores of the hollow fibers and the gas on the outer surface of the membrane bundles, the membrane can be encased within an impervious barrier over the entirety of its longitudinal outer surface, except for a non-encased circumferential area of gas flow in and out of the system. In this regard, it should be noted that, for hollow fiber or other suitable membrane configurations, bundle designs providing for flow patterns of the cross-flow type have been commonly employed in commercial practice. In cross-flow operation, the flow direction of permeate gas on the permeate side of the membrane is at right angles to the flow of feed gas on the feed side of the membrane. For example, in the use of hollow fiber bundles and the passages of feed gas on the outside of the hollow fiber membranes, the flow direction of permeate in the bores of the fibers is generally at right angles to the flow of feed over the external surface of the hollow fibers. Likewise, in the inside-out approach in which the feed gas is passed through the bores of the hollow fibers, the permeate gas passes from the surface of the hollow fibers in a direction generally at right angles to the direction of the flow of feed within the bores of the hollow fibers and then, within the outer shell, in the direction of the outlet means for the permeate gas. As indicated above, countercurrent flow patterns can be created by the encasing of the hollow fiber bundle within an impervious barrier over the entirety of its longitudinal outer surface except for a non-encased circumferential region. This enables the feed gas or permeate gas, depending on the desired manner of operation, i.e., inside-out or outside-in, to pass in countercurrent flow outside the hollow fibers parallel to the flow direction of permeate gas or feed gas in the bores of the hollow fibers. The feed gas on the outside of the hollow fiber bundle, for example, is caused to flow parallel to, rather than at right angle to, the central axis of the fiber bundle. It will be understood that the membrane fibers may be organized either in straight assemblies parallel to the central axis of the bundle, or alternatively, can be wound in helical fashion around the central axis. In any event, the impermeable barrier material maybe a wrap of impervious film, e.g., polyvinylidene or the like. Alternatively, the impermeable barrier may be an impervious coating material, e.g., polysiloxane, applied from an innocuous solvent, or a shrink sleeve installed over the membrane bundle and shrunk onto said bundle. The impermeable barrier thus encases the hollow fiber or other membrane bundle and has an opening therein permitting the flow of gas into or from the bundle so that the fluid flows in a direction substantially parallel to the axis of the fiber bundle. For purposes of the invention, the flow pattern is preferably one of countercurrent flow of the wet, high purity argon feed stream and the permeate gas/purge gas.

The membranes employed for the argon purification purposes of the invention may comprise composite membranes in which a separation layer deposited on a porous substrate determines the selectivity characteristics of the membrane, as with cellulose acetate or ethyl cellulose on a polysulfone substrate or asymmetric membranes of one material, e.g., polysulfone, with two separate morphological regions, one comprising a thin, dense skin region that determines the selectivity characteristics of the membrane and a less dense, porous support region, or variations thereof, such as multicomponent membranes. While dense, homogeneous membranes are commonly used for product drying applications, the use of such dense membranes is not preferred because of the inherent limitations thereof, although such dense membranes can be used in the practice of the invention.

The membranes employed in the practice of the invention will commonly be employed in assemblies of membrane bundles, typically positioned within enclosures to form membrane modules comprising the principal element of a membrane system. A membrane system may comprise a single module or a number of such modules, arranged for either parallel or series operation.

Purge gas employed in the practice of particular embodiments of the invention should be a dry, or relatively dry purge gas, conveniently obtained from the sources indicated above. A relatively dry purge gas is one having a moisture partial pressure not exceeding the partial pressure of moisture in the dried argon product. Preferably, said purge gas moisture partial pressure will be less than half of the moisture partial pressure in the product argon stream, as will be the case with respect to the sources of purge gas disclosed above with respect to illustrated embodiments of the invention. As referred to in the appended claims, a dry purge gas will be understood to comprise either a dry purge gas or a relatively dry purge gas as described above.

As indicated above, it is within the scope of the invention to employ an adsorption system, as in conventional practice, with a membrane dryer system positioned upstream thereof, although the adsorption system may not be required in particular applications of the argon purification process and system of the invention. When employed, the adsorption system will generally be a thermal swing adsorption (TSA) system. Those skilled in the art will appreciate that such TSA systems contain one or more beds of adsorbent material capable of selectively adsorbing moisture as the more readily adsorbable component of the purified argon stream. It will be understood that such TSA systems employ various processing cycles in which each bed, in sequence, generally undergoes an adsorption-desorption cycle in which the less readily adsorbable component i.e., the purified argon, is withdrawn from the bed during introduction of the feed gas mixture to the bed at lower adsorption temperature levels and in which the more readily adsorbable component, i.e. moisture, is withdrawn from the bed during bed thermal regeneration at higher bed regeneration temperature. While TSA systems are known to generally involve a number of individual steps in the processing cycle carried out in each bed, the details of the TSA processing cycle employed in particular embodiments, e.g. temperature level, duration of thermal input, purge and the like, do not reach to the heart of the invention and need to be described in detail herein. Any suitable adsorbent material capable of selectively adsorbing residual, trace amounts of moisture from the purified argon stream can be employed in the TSA system, with zeolite molecular sieves, such as 5A or 13X sieves, being generally preferred. It should also be noted that other conventional cleanup techniques, such as known chemical, absorption or pressure swing adsorption techniques, may be used in place of TSA systems for such removal of trace amounts of moisture present in the purified argon stream removed as non-permeate gas from the membrane dryer.

In the preferred embodiment of the invention, as illustrated in the Fig. 2 embodiment, and in the Fig. 4 alternative embodiment, the membrane dryer is desirably operated with a countercurrent flow path in the membrane bundle and with the passage of dry purge gas on the permeate side thereof to carry moisture away from the permeate side of the membrane and to maintain a high driving force across the membrane for moisture removal. This approach serves to minimize the membrane surface area required, and the argon product loss necessary to achieve a given product dewpoint, i.e. Level of drying. It is desirable to maintain argon product loss due to co-permeation through the membrane to less than 5%, preferably less than 2%, and most preferably less than 0.5% of the total flow of the wet, purified argon stream through the membrane dryer. By contrast, the Fig. 3 embodiment of the invention does not employ a purge gas on the permeate side of the membrane to facilitate removal of moisture from the surface thereof. Co-permeation of argon product is used to facilitate removal of moisture, with the permeate gas being recycled as indicated above. The gas flow patterns employed may be of the cross-flow type in which the flow direction of permeate gas on the permeate side of the membrane is at right angles to the flow of the purified argon stream on the feed side of the membrane. Countercurrent flow patterns, created by encasing the membrane, e.g. hollow fiber bundle, within an impervious barrier as indicated above, are generally preferred, however, for the Fig. 3 embodiment as well as for other embodiments of the invention.

The purification of crude argon obtained by cryogenic distillation of an argon containing stream represents an important industrial processing operation. In overcoming the operational problems associated with the current argon purification approach, the invention provides an important advance in the argon field. The inherent simplicity of membrane dryers, and the overcoming of the temperature sensitivity problems occasioned in particular by periods of high ambient and/or cooling water temperatures, enables the practice of the invention to provide simple, low cost argon purification with minimized argon product loss or contamination.

**Claims**

1. A process for the purification of crude argon comprising:
    (a) passing a crude argon stream containing undesired oxygen as feed gas to a catalytic combustion unit for reaction of the oxygen Content of the crude argon stream with hydrogen or a fuel gas to form moisture, thereby forming a wet, purified argon stream;
    (b) cooling the wet, purified argon stream and removing condensed moisture therefrom;

8

(c) introducing the wet, purified argon stream to a membrane dryer capable of selectively permeating residual moisture present therein;

(d) recovering a dry, high purity argon stream from the membrane dryer as non-permeate gas;

(e) separately withdrawing moisture-laden gas as permeate gas from the low pressure permeate side of the membrane dryer; and

(f) recycling the permeate gas for passage to the catalytic combustion unit as feed gas together with additional quantities of said crude argon stream, whereby dry, high purity argon is obtained without significant sensitivity to variations in ambient temperature conditions and with loss of desired argon product being minimized.

2. The process of Claim 1 and including compressing the crude argon stream prior to passage thereof to said catalytic combustion unit, said permeate gas being recycled upstream of the compression of the crude argon stream.

3. The process of Claim 1 and including passing dry purge gas to the permeate side of the membrane dryer to facilitate removal of permeating moisture from the surface of the permeate side of the membrane dryer.

4. The process of Claim 3 in which said purge gas comprises a portion of the dry, high purity argon removed from the membrane dryer as non-permeate gas.

5. The process of Claim 3 in which said purge gas comprises a portion of the feed gas to the catalytic combustion unit.

6. The process of Claim 1 in which the membrane dryer contains membrane bundles adapted for a countercurrent flow pattern, and including flowing the permeate gas generally parallel to the flow of the wet purified argon stream in the membrane dryer.

7. The process of Claim 1 and including passing the dry high purity argon from the membrane dryer to an adsorption system adapted for removal of trace quantities of moisture from said high purity argon, and recovering a further purified, dry, high purity argon product stream from said adsorption system.

8. The process of Claim 1 in which said crude argon stream contains about 95% argon, 2% oxygen, 2% hydrogen and 1% nitrogen, said dry, high purity argon stream having an argon concentration of about 97%, 2% hydrogen and 1% nitrogen.

9. The process of Claim 1 in which said oxygen Content of the crude argon stream is reacted with hydrogen in the catalytic combustion unit.

10. A system for the purification of crude argon Comprising:

(a) a catalytic combustion unit adapted for the reaction of the oxygen content of a crude argon stream with hydrogen or a fuel gas to form moisture;

(b) conduit means for separately passing a crude argon stream and hydrogen or a fuel gas to said catalytic combustion unit;

(c) conduit means for removing a wet, purified argon stream from said catalytic combustion unit;

(d) means for cooling the wet, purified argon stream removed from the catalytic combustion unit and for removing condensed moisture from the cooled, wet, purified argon stream;

(e) a membrane dryer capable of selectively permeating residual moisture present in the wet, cooled purified argon stream;

(f) conduit means for passing a cooled, wet purified argon stream from the means for removing condensed moisture therefrom to said membrane dryer;

(g) conduit means for recovering a dry, high purity argon stream from the membrane dryer as non-permeate gas; and

(h) separate conduit means for withdrawing moisture as permeate gas from the low pressure permeate side of the membrane dryer, and for recycling said permeate gas for passage, together with additional quantities of the crude argon stream, to the catalytic combustion unit,

whereby dry, high purity argon is obtained without significant sensitivity to variation in ambient temperature conditions and with loss of desired argon product being minimized.

**11.** The system of Claim 10 and including compressor means for compressing the crude argon stream and recycled permeate gas being passed to the catalytic combustion unit, recycled permeate gas being recycled upstream of the compressor means.

**12.** The system of Claim 10 and including conduit means for passing dry purge gas to the permeate side of the membrane dryer to facilitate removal of permeating moisture from the surface of the permeate side of the membrane dryer.

**13.** The system of Claim 12 in which the conduit means for dry purge gas comprises conduit means for passing a portion of the dry, high purity argon stream removed from the membrane dryer to the permeate side of the membrane dryer.

**14.** The system of Claim 12 in which the conduit means for dry purge gas comprises conduit means for passing a portion of the crude argon stream to the permeate side of the membrane dryer.

**15.** The system of Claim 10 in which the membrane dryer contains membrane bundles adapted for a countercurrent flow pattern in which the permeate gas flows generally parallel to the flow of the cooled, wet, purified argon stream.

**16.** The system of Claim 10 in which the membrane dryer comprises bundles of hollow fiber membranes.

**17.** The system of Claim 10 and including an adsorption system adapted for removal of trace quantities of moisture from the dry, high purity argon stream removed from the membrane dryer; and conduit means for recovering a further purified, dry, high purity argon product stream from said adsorption system.

**18.** The system of Claim 17 and including dust filter means for removing particulate material from the further purified, dry, high purity argon product stream.

EP 0 613 857 A1

# Fig. 1

# Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | EP-A-0 397 204 (UNION CARBIDE INDUSTRIAL GASES TECHNOLOGY CORPORATION) <br> * page 3, line 35 - line 50; claims 1-14; figure 4 * | 1-18 | C01B23/00 |
| Y | GB-A-2 160 439 (THE BOC GROUP) <br> * the whole document * | 1-18 | |
| Y | EP-A-0 017 538 (L'AIR LIQUIDE) <br> * page 3, line 10 - line 25 * | 1-18 | |
| A | EP-A-0 358 915 (UNION CARBIDE) <br> * figure * | 1-18 | |
| A | FR-A-2 640 159 (COMMISSARIAT A L'ENERGIE ATOMIQUE) <br> * the whole document * | 1-18 | |
| A | EP-A-0 516 401 (THE BOC GROUP) | | |
| | | | **TECHNICAL FIELDS SEARCHED (Int.Cl.5)** |
| | | | C01B <br> B01D |

The present search report has been drawn up for all claims

| Place of search | Date of completion of the search | Examiner |
|---|---|---|
| THE HAGUE | 26 May 1994 | Zalm, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)